# EUROPÄISCHE PATENTSCHRIFT

(11) **EP 0 781 732 B1**
(45) Veröffentlichungstag und Bekanntmachung des Hinweises auf die Patenterteilung: **02.06.1999**
(21) Anmeldenummer: 96120862.6
(22) Anmeldetag: 24.12.1996
(51) Int. Cl.: C04B 26/02, C04B 14/02, C04B 41/48

(54) **Harz/Füllstoffsystem zur Erzeugung von Beschichtungen, daraus hergestellter Kunststoffboden und Verfahren zu seiner Herstellung**
Resin/filler system for making coatings, plastic floors obtained therefrom and preparation thereof
Système de résine/charge pour la production de revêtements, sol plastique préparé à partir de ce système et méthode pour sa préparation

(30) Priorität: 29.12.1995 DE 19549104
(43) Veröffentlichungstag der Anmeldung: 02.07.1997
(73) Patentinhaber: Remmers Bauchemie GmbH, D-49624 Löningen (DE)
(72) Erfinder: Abdel-Rahman, Mehanna, 49661 Cloppenburg (DE)
(74) Vertreter: Thiel, Christian, Dr. Dipl.-Chem.

(56) Entgegenhaltungen:
- EP-A- 0 640 651
- WO-A-91/11404
- DE-A- 2 627 081
- DE-A- 4 218 414
- FR-A- 2 242 344

## Beschreibung

Die Erfindung betrifft ein Harz/Füllstoffsystem zur Erzeugung von Beschichtungen, daraus hergestellte Kunststoffböden und ein Verfahren zur Herstellung derselben.

Es ist seit langem bekannt, Oberflächen mit Kunststeinen zu belegen, die die Struktur natürlicher Steine aufweisen. Dabei kommen auch Kunstharzmassen zum Einsatz, mit denen sich aber bisher Natursteineffekte nur in Ausnahmefällen erzeugen lassen, siehe DE-U-295 04 140 und 88 05 089, DE-A-26 27 081 und 2 155 232. Insbesondere ist es bislang nicht gelungen, eine leicht verarbeitbare Beschichtungsmasse mit einer Granit- oder granitähnlichen Struktur zu erzeugen.

Die bei der Erzeugung von Kunststoffböden zum Einsatz kommenden Materialien, insbesondere selbstverlaufende Epoxid- und Polyurethanharze, haben zwar die für Fußbodenbeläge verlangten mechanischen Eigenschaften sowie die nötige Dauerhaftigkeit, sind jedoch aufgrund ihrer eingeschränkten Pigmentierungsmöglichkeiten und optischen Eigenschaften wenig geeignet, einen überzeugenden Natursteineffekt zu liefern, siehe DE-A-32 39 983, DE-C-39 32 743 und "das Bauzentrum" 8/95, S. 115, "Die Anforderungen an Industriefußböden werden immer größer."

Kunststoffoberflächen mit einer granitähnlichen Struktur sind dagegen aus der Möbelindustrie bekannt. Sie werden beispielsweise zur Herstellung von Dekorplatten etwa für Tischplatten und Arbeitsflächen, in Küchen, im Sanitärbereich und im Ladenbau verwandt. Die dafür eingesetzten Kunstharze, zumeist Acrylat- und Polyesterharze, enthalten eine Pigmentierungsmasse, die zu einem größeren Teil aus Aluminiumoxidtrihydrat und zu einem kleineren Teil aus farbigen ungesättigten Polyester bzw. Polymethylmethacrylat-Teilchen besteht.

Diese Kunstharzmassen bedürfen einer besonderen Verarbeitung, damit der Graniteffekt zum Tragen kommt. Die dabei zum Einsatz kommenden Harzmassen bedürfen der Aushärtung, die in der Regel dadurch vorgenommen wird, daß die fertigen Platten durch einen Ofen geführt werden. Die Aushärtung erfolgt dabei außerordentlich rasch, so daß Sedimentationserscheinungen aufgrund des unterschiedlichen spezifischen Gewichtes der Kunstharzmasse einerseits und der mineralischen Füllstoffe andererseits nicht zum Tragen kommen.

Allerdings sind die bei der Möbelindustrie zum Einsatz kommenden Kunstharzmassen für die Erstellung von beispielsweise Fußbodenbelägen aufgrund mangelnder mechanischer Beanspruchbarkeit weniger geeignet. Die dort praktizierten Verfahren sind zur Herstellung von Fußböden, vor allem wegen der Besonderheiten bei der Verarbeitung, ebenfalls nicht geeignet. Ganz im allgemeinen gilt, daß die in der Möbel industrie zum Einsatz kommenden Dekorplatten für die Erstellung großflächiger Oberflächenauskleidungen sowohl im Preis als auch in der Verarbeitung zu aufwendig sind, siehe US-A-5 321 055, US-A-5 043 377, DE-A-27 18 024, DE-A-26 27 081 und US-A-5 407 988.

Wegen der außerordentlich hohen Preise für Natursteinböden, insbesondere Granitböden, wie für die oben genannten Dekorplatten wäre eine preiswerte Beschichtungsmasse für die Erzeugung von Beschichtungen mit Natursteineffekt wünschenswert, insbesondere eine solche für eine granitähnliche Struktur, die sich an Ort und Stelle manuell oder maschinell leicht verarbeiten läßt. Ein aus US-A-4 956 030 bekanntes Beschichtungsverfahren ist recht kompliziert und aufwendig.

Ziel der Erfindung ist daher die Bereitstellung eines Harz/Füllstoffsystems zur Erstellung einer solchen Beschichtung sowie von Verfahren, mit dem insbesondere ein solcher Kunststoffboden erstellt werden kann. Das Harz/Füllstoffsystem soll insbesondere mit Hilfe branchenüblicher Werkzeuge und Beschichtungstechniken verarbeitbar sein.

Es hat sich nun überraschend gezeigt, daß ein Harz/Füllstoffsystem zur Erzeugung von Beschichtungen, insbesondere Kunststoffböden mit Natursteineffekt auf Basis von für Kunststoffböden üblichen Kunstharzen und Zuschlagsstoffen geeignet ist, wenn es 3 bis 90 Gew.% Harzmasse und 10 bis 97 Gew.-% einer Pigmentierungsmasse enthält, wobei die Pigmentierungsmasse selbst 20 bis 99,5 Gew.-%, bezogen auf die Pigmentierungsmasse, fein vermahlenen mineralische Füllstoffe, 0,1 bis 35 Gew-% Fließmittel, aus sphärischen Teilchen 0,25 bis 50 Gew.-% undurchsichtige Effektteilchen einer Teilchengröße > 100 µm, und 0,25 bis 50 Gew.-% durchsichtige und/oder durchscheinende Effektteilchen einer Teilchengröße > 100 µm enthält.

Alle Prozentangaben beziehen sich sofern nicht anders angegeben, auf das gesamte Harz/Füllstoffsystem.

Für Kunststoffböden übliche Polymere sind Epoxidharze und Polyurethanharze, die auch erfindungsgemäß zum Einsatz kommen. Diese Harze werden zumeist als Zwei-Komponenten-Harze eingesetzt, d. h. die eigentliche Harzmasse benötigt eine zweite Komponente, die die Aushärtung bewirkt. Bei Polyurethanharzen sind aber auch Ein-Komponenten-Abmischungen bekannt, die allein durch Aufnahme der Luftfeuchtigkeit aushärten.

Solche für Kunststoffböden übliche Harz/Füllstoffsysteme sind selbstverlaufend, d. h. sie sind so niedrig viskos eingestellt, daß sie, allein aufgrund der Schwerkraft, eine gleichmäßige Verteilung und regelmäßige Oberfläche auf den vorbereiteten und damit beschichteten Böden ausbilden. Diese niedrige Viskosität hat normalerweise den Effekt, daß darin enthaltene mineralische Bestandteile eines höheren spezifischen Gewichtes sedimentieren, was zu einer inhomogenen Verteilung der Füllstoffe führt. Da die Erreichung des Gelzustandes bzw. Aushärtung derartiger selbstverlaufender Kunstharzmassen in der Regel mehrere Stunden dauert und auch nicht wesentlich verkürzt werden kann, stellt die Sedimentation ein Problem dar, wenn es auf eine sehr homogene Verteilung schwerer Füllstoffe ankommt. Um der Sedimentation entgegen zu wirken, werden in solchen Fällen emulgierend und suspendierend wirkende Zuschläge eingesetzt, beispielsweise Bentonite oder pyrogene Kieselsäure.

Die zum Einsatz kommenden Kunstharze können, gefüllt mit der Pigmentierungsmasse, als einzelne Schicht aufgebracht werden oder aber in Form mehrerer Schichten, von denen nur eine die Pigmentierungsmasse enthält oder zwischen denen die Pigmentierungsmasse eingestreut vorliegt.

Für die einzelnen Schichten können unterschiedliche Kunstharzmassen verwandt werden. Eine vorteilhafte Anordnung ist eine Effektschicht aus einem Zweikomponenten-Epoxidharz und einer UV-beständigen Deckschicht aus einem Ein- oder Zweikomponenten-Polyurethanharz.

Als Füllstoffe können allgemein auf diesem Gebiet übliche Füllstoffe, insbesondere mit einer amorphen oder mittleren kristallinen Brechungszahl n_{D} von 1,4 bis 1,65, eingesetzt werden, beispielsweise Metalloxide, -sulfate, -carbonate, -silikate, Siliciumdioxid oder Mischungen davon, wobei die Körnung 100 µm betragen sollte und zweckmäßigerweise in einem Bereich von etwa 20 bis 70 µm liegt. Zum Einsatz kommen können im einzelnen Calciumcarbonat, Magnesiumsilikate, etwa Talk, Aluminium-kalium-Silikate, etwa Glimmer, Bariumsulfat, Aluminiumoxidtrihydrat, Perlite, Quarzpulver, Glaspulver, Kieselsäure, Holzmehl, Gips, Diatomeenerde, Tonmineralien, Marmorpulver, Aluminiumstearat, Anhydrit, Boracit, Borax und dgl. Besonders bevorzugt für die erfindungsgemäßen Zwecke sind Aluminiumhydroxidtrihydrat, Calciumcarbonat, Talkum, Tonmineralien wie Kaolin, Kieselsäure, Glaspulver und Quarzpulver.

Als Antiabsetz- bzw. Verdickungsmittel können auf diesem Gebiet übliche eingesetzt werden. In Frage kommen anorganische wie organische Produkte, bei ersteren insbesondere Kieselsäure, Aluminiumoxid sowie silikatische Materialien, wobei sich teilweise Überschneidungen mit den Füllstoffmaterialien ergeben. Bei den organischen Produkten können übliche Produkte auf Kohlenhydratbasis, Eiweißverbindungen, Fettsäureseifen und -amide, Polyamide sowie synthetische Polymere und Oligomere eingesetzt werden.

Als undurchsichtige Effektteilchen, die farbig oder ungefärbt sein können, werden typische Mineralteilchen aus calciniertem Talkum, Magnesit, Goethit, Ilmenit, Siderit, Granit, Bleiglanz, Basalt, Bimsmehl, Lava, Plastorit-Naitsch, Anthrazit, Steinkohle, Hämatit, Korund, Anhydrit, Anatas, Kreide, Sandstein, Schiefer und dergleichen verwandt. Andere geeignete Teilchen hierfür sind Torf, Späne, Schnitzel bzw. Pulver aus Ziegeln, Porzellan, Gips, Nußschalen, Holzkohle, Sägemehl, Korkmehl, Schlacke, Seemuscheln, Gummi sowie aus Polymeren, die mit Pigmenten und Füllstoffen versetzt sind, z. B. Epoxidharz, Polyurethane, Polyester, Polyacrylate, Polyolefine, Phenolharze, Harnstoffharze, Melaminharze, Polyvinylester, Polyvinylether, Polyvinylchlorid, Polyvinyldenchlorid, Polystyrol, Polyacetate, Polyharnstoffe, ABS-Harze, Celluloseester, Cellusloseether, Polyfluorcarbone, Polyamide, Polyarylester, Polyarylsulfide, Polyarylsulfone, Polyimide, flüssigkristalline Polymere, Caseinderivate, Kautschuk, Siliconderivate, Siliconharze und dergleichen.

Die Körnung der Effektteilchen sollte > 100 µm betragen und zweckmäßigerweise in einem Bereich von 200 µm bis 3mm liegen. Vorzugsweise haben die undurchsichtigen Effektteilchen eine optische Dichte > 2,0, und die durchsichtigen eine solche von < 2,0.

Als durchsichtige und/oder durchscheinende Effektteilchen, die farbig oder ungefärbt sein können, werden typische Mineralteilchen aus Alabaster, Albit, Achat, Bergkiesel, Calcit, Feldspat, Glas, Marmor, Glimmer, Malachit, Quarzit, Sand, Wollas-stronit und dergleichen verwandt. Andere geeignete Teilchen hierfür sind Späne, Schnitzel bzw. Pulver aus den im vorhergehenden Absatz genannten Stoffen bzw. Polymeren, soweit durchsichtig oder durchscheinend verfügbar.

Als mineralische Effektteilchen kann Gesteinsgranulat eingesetzt werden, beispielsweise Mamor, Basalt, Porphyr oder beliebiges anderes Gestein einer gewünschten Färbung. Als mineralische Effektteilchen kommen auch Keramikteilchen einer gewünschten Farbe in Frage, die auch, zur Erzielung eines gewünschten Farbeffekts, mit anderen mineralischen Teilchen gemischt werden können. Der Vorteil der Verwendung mineralischer Effektteilchen liegt u. a. darin, daß sie der Harzmasse zugleich als Stützkorn dienen können, was die Verarbeitung der Kunststoffmasse erleichtert. Insbesondere ist ein Glätten und Verdichten auf maschinellem Wege oder mit Hilfe von Kellen möglich.

Zusätzlich oder alternativ zu den mineralischen Effektteilchen können synthetische Effektteilchen eingesetzt werden. Unter synthetischen Effektteilchen werden solche auf Kunststoffbasis verstanden, beispielsweise aus Polyester, Alkyd, Polyvinylchlorid, Poly(meth)acrylat und Copolymerisate davon, Polystyrol, Nitrocellulose, Polyurethan, Expoxid, die jeweils auf die gewünschte Art und Weise eingefärbt sind. Diese farbigen Kunststoffteilchen können als Granulat vorliegen, in Form regelmäßiger geometrischer Körper oder als Plättchen oder Chips, je nach zu erzielendem Effekt. Für die Imitation von Granit ist insbesondere das Vorliegen als Granulat zweckmäßig.

Als farbiges Kunststoffgranulat in der Pigmentierungsmasse werden vorzugsweise farbige Polyestergranulate eingesetzt. Andere farbige Granulate können selbstverständlich ebenfalls verwandt werden. Es versteht sich dabei, daß das farbige Kunststoffgranulat aus gefärbten Kunststoffpartikeln unterschiedlicher Größe besteht, wobei die Größe und die Farbzusammensetzung verantwortlich ist für den Struktureffekt. Zur Nachahmung eines grob kristallinen Granits einer grünlichen Grundfarbe werden daher neben feineren grünen Partikeln relativ grobe weiße und schwarze Kunststoffkörnchen einer Größe von beispielsweise bis zum 2 mm benötigt.

Durch das Zusammenspiel von Polymer, Füllstoff und den unterschiedlichen Effektteilchen (Farbe, Größe, Transparenz) wird ein regelloses Farbmosaik gebildet, welches einen Naturstein- und Graniteffekt ergibt.

Bei dem erfindungsgemäßen Harz/Füllstoffsystem wird 10 bis 97 Gew.-%, bevorzugt 30 bis 90 Gew.-%, Pigmentierungsmasse eingesetzt, um den erwünschten wolkenfreien Effekt zu erzielen. Bei hohen Anteilen an Pigmentierungsmasse sind die Beschichtungsmassen, bedingt durch Adhäsions- und Kohäsionskräfte, schwer zu verarbeiten - besonders von Hand - und eingeschränkt in ihrem Fließverhalten, was die Ausbreitung auf einer ebenen bzw. glatten Oberfläche anbetrifft. Um diesen Nachteil zu beheben, muß man entsprechendes Verlaufs- bzw. Fließmittel zusetzen.

Als Verlaufs- bzw. Fließmittel werden kugelförmige Zuschläge, die farbig oder ungefärbt, durchsichtig oder undurchsichtig, massiv oder hohl mit einer Teilchengröße < 1000 µm bevorzugt, < 250 µm eingesetzt. In Frage kommen hier insbesondere:
- Glas/Borsilikat - "Microspheres" bzw. "Ballotini" genannt,
- Flugasche von Kohlekraftwerken - "Cenospheres" genannt,
- Borsilikate- oder Silica-Hohlkugeln - "Microballons" genannt,
- Styroacrylat,
- Aluminiumsilikat,
- Polystyrol,
- Quarzsand - "Granucol" genannt,
- Keramik - "Zeeospheres" genannt.

Bevorzugt sind Microspheres und/oder Granucol.

Die kugelförmigen Zuschläge haben, neben dem Fließeffekt, eine Reihe von weiteren vorteilhaften Wirkungen. So dienen sie außerdem als Stützkorn mit sich daraus ergebenen Vorteilen für die Verarbeitung der Masse und die Erzielung einer gleichmäßigen Schichtdicke. Weiterhin sind derartige kugelförmige Zuschläge geeignet, die durch die Zugabe der Effektteilchen bewirkten Struktur- und Farbeffekte zu unterstützen.

Besonders bei hochgefüllten Beschichtungsmassen, wo Anteile von 70 bis 97 Gew.-% an Pigmentierungsmasse angestrebt werden, werden zusätzlich üblichen Mörtelhilfsmitteln auch Paraffinöl, micronisierte Wachse und dergleichen verwendet. Die Anteile davon betragen vorzugsweise 0,5 bis 5 Gew.-% bezogen, auf das System.

Um den Graniteffekt bzw. Hintergrund der Pigmentierungsmasse farbmäßig zu verstärken, können Farbstoffe oder Pigmente in Konzentrationen bis etwa 10 Gew.-% zugegeben werden. Allerdings ist dabei zu beachten, daß die Effektteilchen nicht dadurch verdeckt werden dürfen. Außerdem können andere Effektzusätze verwendet werden, wie metallische Späne, Fasern, Schnitzel, Stäube, Flocken z. B. aus Aluminium, Bronze, Chrom, Eisen, Gold, Kupfer, Messing, Nickel, Stahl, Silber, Platin, Titan, Wolfram, Zink, Zinn und dergleichen, nicht metallische Stoffe aus Chromchlorid, Kobaltsulfid, Nickelsulfid, Magnesiumsulfid, Titannitrid sowie natürliche oder synthetische Faserstoffe z. B. auf Baumwolle, Flachs, Glas, Haar, Hanf, Papiermasse, Protein, Holzfasern, Reyon, Steinwolle, Wolle, Polyester, Polyarcylnitril, Polyethylen, Polypropylen, Polyamid, Cellulose, Keramik und dergleichen.

Bei den Zuschlagsstoffen handelt es sich um übliche Lack- bzw. Kunststoff-Hilfsmittel und Additive in den jeweils üblichen Konzentrationen, wie z. B. Gleitmittel, Antiblockmittel, Antioxidanten, UV-Absorber, sterisch gehinderte Amine, Fungizide, Antistatika, Netzmittel, Entlüfter, Entschäumer, Flammschutzmittel, Flexibilisatoren, Weichmacher, Haftvermittler, Biocide, Verlaufmittel, Stabilisatoren und dergleichen.

Mineralische Bestandteile des erfindungsgemäßen Harz/Füllstoffsystems, wie beispielsweise Aluminiumoxidtrihydrat, hier auch als ATH bezeichnet, haben ein relative hohes spezifische Gewicht. Dagegen können die Effektteilchen, soweit sie organischer Natur sind, ein relativ niedriges Gewicht aufweisen. Hinzu kommen, insbesondere bei den Effektteilchen, sehr starke Unterschiede in der Körnung. Durch diese gewichtsmäßigen oberflächenmäßigen Unterschiede zwischen den einzelnen Komponenten der Pigmentierungsmasse kommt es über die normale Sedimetation hinaus zu Trennvorgängen, weil sich die schweren, mineralischen Bestandteile schneller absetzen als die leichten, organischen Bestandteile. Dies stellt ein Problem insbesondere bei niedrig gefüllten selbstverlaufenden Beschichtungsmassen dar, etwa solchen mit einem Pigmentierungsmassenanteil von weniger als 70 Gew.-%. In solchem Fall bilden die leichten, feinen Anteile an der Oberfläche der Beschichtung eine Art Wolke, die den erwünschten Natursteineffekt stört bzw. stark herabsetzt.

Zwar kann dieser Sedimentation und Trennung durch Zusatz von Antiabsetzmmitteln, beispielsweise Bentonit und pyrogene Kieselsäure, entgegengewirkt werden, jedoch hat dieser Zusatz eine Veränderung der Opazität und eine weitere Erschwerung der Verarbeitung bzw. des Verlaufs zur Folge.

Zudem beruht der Farbeffekt auf einem Zusammenwirken der Effektteilchen mit dem mineralischen Füllstoff; bereits ein geringer Zusatz recht grober Effektteilchen reicht aus, der gesamten Menge Farbe zu verleihen, ungeachtet der transpartenten Natur der Kunstharzmatrix. Schließlich kommt es noch auf eine relativ große Übereinstimmung des Brechungsindexes sowohl des mineralischen Füllstoffs als auch der Kunstharzmatrix an, um die für den Natursteineffekt erforderliche Opazität zu erzielen.

Angesichts dieser Probleme ist es überraschend, daß mit dem erfindungsgemäßen Harz/Füllstoffsytem insbesondere für Fußböden bzw. der diesem System zugrunde liegenden Kunstharzmasse ein überzeugender Natursteineffekt erzielt werden kann.

Beschichtungsmassen mit 10 bis 85 Gew.-% Pigmentierungsmasse, bevorzugt 50 bis 70 Gew.-%, sind naturgemäß selbstverlaufend bzw. weisen hohe Fließeigenschaften auf und sind zur Beschichtung von horizontalen Flächen geeignet. Gefälle von 3 bis 5 % können je nach Fomrulierung toleriert werden.

Beschichtungsmassen mit 70 bis 95 Gew.-% Pigmentierungsmasse, bevorzugt 75 bis 90 Gew.-%, sind in der Regel spachtelartig und sind zur Beschichtung von Vertikalflächen besonders geeignet. Beschichtungsmassen mit 80 bis 97 Gew.-% Pigmentierungsmasse, bevorzugt 85 bis 95 Gew.-%, sind meistens mörtelartig und können unbeschränkt für vertikale und geneigte Flächen eingesetzt werden.

Durch Einsatz von entsprechenden Hohlkugeln in der Pigementierungsmasse können 20 bis 30 % Gewichtseinsparung bzw. weniger Dichte erzielt werden, so daß die Beschichtungsmasse sogar über Kopf verarbeitet werden kann.

Das erfindungsgemäße Harz/Füllstoffsystem enthält neben der Pigmentierungsmasse lediglich übliche Kunstharzmassen, wobei in der Regel Zwei-Komponenten-Epoxidharze und -Polyurethanharze zum Einsatz kommen bevorzugt werden. Polyurethanharze auf aliphatischen Polyisocyanaten basieren, die eine geringere Vergilbungstendenz zeigen, als Polyurethanharze, die auf aromatischen Polyisocyanaten beruhen.

Die für die Aushärtung der genannten Epoxid- und Polyurethanharze benötigte zweite Komponente ist eine übliche. Bei Epoxidharzen werden in der Regel aliphatische, cycloaliphatische oder araliphatische Polyamine in Verbindung mit alkoholischen Komponenten eingesetzt. Bei Polyurethanharzen kommen übliche Polyhydroxyverbindungen zum Einsatz. Einkomponenten-Polyurethanharze härten mit der Luftfeuchtigkeit aus.

Das erfindungsgemäße Harz/Füllstoffsystem wird insbesonders zur Beschichtung von Fußbodenflächen eingesetzt, ist allerdings auch zur Beschichtung bzw. Auskleidung von anderen Flächen (z. B. Arbeitsflächen, Theken, Fensterbänken, Treppenstufen, und dergleichen) geeignet.

Geeignete Untergründe für die erfindungsgemäßen Beschichtungsmassen sind mineralische Untergründe wie Beton, Estriche und Putze, sonst Gußasphalt, keramische Beläge, metallische Untergründe, Holz, Korkböden, Parkett, PVC, Linoleum und dergleichen. Die obengenannten Untergründe werden vorher, wie allgemein üblich, vorbehandelt bzw. mit einer passenden Grundierung versehen.

Das erfindungsgemäße Harz/Füllstoffsystem kann als Einkomponentensystem einer selbsthärtenden Harzmasse bestehen, die bereits mit der Pigmentierungsmasse versetzt ist. Zweckmäßigerweise liegt ein solches System aber als Mehrkomponentensystem vor, beispielsweise einer Harzkomponente A, die bereits die Pigmentierungsmasse enthalten kann, und einer Härterkomponenten B. Die beiden Komponenten müssen dann unmittelbar vor der Anwendung sorgfältig gemischt werden. Es ist auch möglich, die Pigmentierungsmasse als eigene Komponente C vorzusehen. Die Pigmentierungsmasse kann aber auch aufgeteilt sein, so daß beispielsweise die Harzkomponente A den feinverteilten mineralischen Füllstoff enthält und die Härterkomponente B die Effektteilchen und sonstige Zuschläge, oder wobei die Effektteilchen als separate Komponente C vorliegen.

Das erfindungsgemäße Harz/Füllstoffsyscern weist zweckmäßigerweise einer Stärke im Bereich von 1 bis 30 mm auf, wobei eine Grundierungsschicht eine Dicke von 0 bis 3 mm haben sollte und die effektgebende Schicht eine solche von 1,0 bis 30 mm. Eine Versiegelungsschicht sollte in jedem Fall ausreichend dick sein, um auf der Grundschicht ggf. aufliegende größere Teilchen vollständig einzuschließen.

Die Erfindung betrifft ferner Beschichtungen aus dem erfindungsgemäßen Harz/Füllstoffsystem und insbesondere pigmentierte Kunststoffböden mit Natursteineffekt.

Gemäß folgender Verfahrensvariante wird ein erfindungsgemäßer Kunststoffboden mit den folgenden Schritten aufgebaut:
a) Vorbereiten des Substrates;
b) Aufbringen einer üblichen Grundierung;
c) Aufbringen des Harz/Füllstoffsystems, wie vorstehend beschrieben, in der erforderlichen Stärke; und
d) Aushärtenlassen der Kunststoffmasse.

Nach der üblichen Vorbereitung des Substrates bzw. Untergrundes wird zunächst eine übliche Grundierung aufgebracht, d. h. der Untergrund wasserdicht versiegelt. Dies kann beispielsweise bei mineralischen Untergründen mit einem Zweikomponenten-Epoxidharz geschehen.

In diesem Fall wird das Harz/Füllstoffsystem in zweckmäßiger Weise in einer Dicke von 1 bis 30 mm, vorzugsweise 1 bis 5 mm, auf den vorbereiteten Untergrund aufgebracht, wobei die maximale Dicke das Dreifache des Korndurchmessers ausmachen sollte. Um das Entstehen von Luftblasen zu verhindern, wird zweckmäßigerweise mit einer Stachelwalze entlüftet. Besonders für senkrechte Flächen werden erfindungsgemäße mörtel- oder spachtelartige Beschichtungsmassen, wie vorstehend beschrieben, verwandt. Im Falle spachtelfertiger Beschichtungsmassen wird der Natursteineffekt dadurch verstärkt, daß die Effektteilchen-sehr gut in der Schwebe gehalten werden.

Auch und besonders für senkrechte Flächen geeignet sind mörtelartige Beschichtungsmassen, wie vorstehend beschrieben. In diesem Fall wird die Mörtelmasse zweckmäßigerweise in einer Dicke von 3 bis 30 mm, vorzugsweise 5 bis 10 mm, auf den vorbereiteten Untergrund wie üblich aufgebracht, wobei die max. Dicke das Dreifache des Korndurchmessers betragen sollte.

Im Falle der erfindungsgemäßen mörtelartigen Beschichtungsmasse wird der Natursteineffekt am stärksten dadurch erzielt, daß die Effektteilchen keine Chance mehr zum Sedimentieren haben.

Bei Mörtel- und spachtelartigen Massen wird ein besonders guter Natursteineffekt dadurch erzielt, daß die Oberfläche nach dem Aushärten geschliffen wird. Durch das Schleifen wird zum einen die kunststoffähnlich glänzende Oberfläche aufgerauht, was an sich den Natursteineffekt schon verbessert. Eine weitere Verbesserung wird aber dadurch erzielt, daß die an Pigmentierungsmasse - infolge Sedimentation - abgereicherten oberflächennahen Schichten entfernt werden und an Pigmentierungsmasse reichere Schichten in die Nähe der Oberfläche gebracht werden. Insbesondere werden auf diese Art und Weise Schichten mit gröberen Strukturen freigelegt, was den Natursteineffekt fördert. Gleichzeitig kann, je nach dem ob mehr oder weniger Material abgeschliffen wird, der Kunststeineffekt nach Wunsch beeinflußt werden.

Um den Eindruck einer polierten Steinoberfläche zu erzielen, kann es im Anschluß an den Schleifprozeß zweckmäßig sein, eine Versiegelung mit einer geeigneten Substanz beispielsweise einem Wachs, oder einer weiteren polymeren Versiegelungsschicht, wie beschrieben, vorzunehmen. Eine solche Versiegelung kann naturgemäß auch bei einer nicht geschliffenen oder polierten Oberfläche vorgenommen werden.

Die Erfindung wird durch die nachfolgenden Beispiele näher erläutert.

### Beispiel 1

Eine Kunstharzmasse zur Erzeugung einer selbstverlaufenden Oberflächen-Beschichtungsmasse insbesondere für Fußböden wurde wie folgt zusammengemischt:

| | |
|---|---|
| 80,00 | Gew.-Teile Bisphenol-A-Epoxidharz |
| 206,40 | Gew.-Teile Aluminiumoxidtrihydrat |
| 25,80 | Gew.-Teile undurchsichtige Polyesterteilchen in schwarz |
| 25,80 | Gew.-Teile durchscheinende Polyesterteilchen in grün |
| 91,00 | Gew.-Teile Microglaskugeln "Ballotini" |
| 1,00 | Gew.-Teile Bentone 27 (10 %ig in Shellsol A) |

Die vorgenannten Bestandteile ergaben 450 Gew.-Teile der Komponente A, die mit 58,30 Gew.-Teilen der Härterkomponente B zur Erzeugung einer selbstverlaufenden Fußbodenmasse vermischt wurden:

58,70 Gew.-Teile mmod. Polyamin auf Isophorondiamin-Basis (H-aktiv Äquivalent von ca. 105)

Die Masse hat eine Dichte von etwa 1,65 kg/l, bei einer Dichte von etwa 1,9 g/cm³ der Pigmentierungsmasse. Eine Mischung der Komponenten A und B wurde dann als selbstverlaufende Fußbodenmasse in einer Schichtdicke von etwa 2 mm ausgebracht, wobei ein Kunststoffboden erhalten wurde, der unter einer stark glänzenden Oberfläche eine Granitstruktur zeigte.

Die Granitstruktur trat nach Anschleifen der Oberfläche plastischer hervor und konnte durch weiteres Abschleifen weiter verbessert, insbesondere gröber gestaltet werden, wobei die Strukturen besser heraustraten. Durch Versiegelung mit einem polymeren Wachs wurden die Kontraste erhöht und trat eine Farbvertiefung auf.

Der Sedimentationseffekt in der selbstverlaufenden Masse konnte durch Zugabe von 0,1 bis 0,5 Gew.% Bentonit herabgesetzt werden. Durch weiteren Bentonitzusatz ergab sich zwar eine weitere Verbesserung bei der Sedimentation, jedoch eine Verschlechterung bei der erzielten granitähnlichen Struktur des Kunststoffbodens.

Die Zugabe von ca. 18 Gew.-% Microglaskugeln "Ballotini" als Fließmittel hat überraschenderweise dem oben erwähnten Sedimentationseffekt entgegengewirkt ohne die Opazität bzw. die Entlüftung negativ zu beeinflussen. Darüber hinaus wurden die Verlaufs- bzw. Fließeigenschaften sehr stark verbessert.

### Beispiel 2

Entspricht Beispiel 1, allerdings werden 51,00 Gew.-Teile EFA-Füller "Cenospheres" anstatt Microgalskugeln "Ballotini 3000" verwendet.

### Beispiel 3

Entspricht Beispiel 1, allerdings werden nur 150,00 Gew.-Teile Aluminiumoxidtrihydrat, 10,00 Gew.-Teile schwarze Polyesterteilchen, 27,20 Gew.-Teile beige Polyesterteilchen, 80,90 Gew.-Teile "Granucol" Quarzsand KG Geba beige und 80,90 Gew.-Teile Microglaskugeln als Pigmentierungsmasse verwendet.

Beschichtungsmassen aus den vorangegangenen Beispielen 1, 2 und 3 sind selbstverlaufend und weisen eine hochglänzende und glatte Oberfläche auf. Die Oberfläche zeigt eine gleichmäßige feine Maserung bzw. ein Mosaik, welches sich über den gesamten Querschnitt der Beschichtung entdeckt.

### Beispiel 4

Entspricht Beispiel 1, allerdings werden zusätzlich 1075,00 Gew.-Teile weiße Glasglitter verwendet, wobei die Teilchenabmessung 0,35 bis 0,70 mm und die Teilchendicke etwa 100µm beträgt.

Nach Beispiel 4 erhält man eine spachtelartige Beschichtungsmasse, welche sich durch die übliche Oberflächen-Spachteltechnik bzw. durch geeignete Auftragsmaschinen insbesondere auf stark geneigten und senkrechten Flächen gut verarbeiten läßt.

Die Oberfläche zeigt einen stärkeren Graniteffekt im Vergleich zu den selbstverlaufenden Beschichtungsmassen der Beispiele 1, 2 und 3.

### Beispiel 5

Ein mit mineralischen Pigmentteilchen gefüllter Kunststoffboden wird aus folgender Masse erstellt:

| | |
|---|---|
| 110,00 | Gew.-Teile reaktiv verdünntes Bisphenol-A/F-Epoxidharz |
| 55,00 | Gew.-Teile cycloaliphatisches Polyamin (Härter) |
| 1,00 | Gew.-Teile Entschäumer |
| 1,00 | Gew.-Teile Verlaufhilfsmittel |
| 207,00 | Gew.-Teile ATH mit farbigem Polyester-granulat |
| 624,00 | Gew.-Teile Basalt, Mamor und Granitbruch einer Körnung im Bereich von 4 bis 7 mm |
| 2,00 | Gew.-Teile Pigment |
| 8,30 | Gew.-Teile Microglaskugeln "Ballotini 3000" |

Diese Masse wurde auf einen gereinigten und mit einer 0,5 mm starken Grundierungsschicht versehenem Betonboden ausgearbeitet und mit Hilfe von Kellen verdichtet. Nach der Trocknung ergab sich ein Kunststoffboden einer Dicke von 21 mm, der nach dem Anschleifen (Abtrag 2 bis 3 mm oder 10 % der Schichtdicke) und Versehen mit einer Polyurethanversiegelung von 0,05 mm den Eindruck eines Steinbodens mit sehr groben Gefüge ergab.

### Beispiel 6

Entspricht Beispiel 1, allerdings wurden 3,00 Gew.-Teile pyrogene Kieselsäure (CAB-O-SIL TS 720) statt 206,40 Gew.-Teile Aluminiumoxidtrihydrat verwendet. Durch Beispiel 7 erhält man einen leicht thixotropierten Verlaufsmörtel, welcher sehr leicht zu verarbeiten ist, durch eingeschränkte Verlaufseigenschaften bleiben jedoch die Stachelwalzstrukturen sichtbar. Der Graniteffekt ist gegeben und kann wie üblich durch Schleifen, Polieren oder Versiegeln verstärkt werden.

### Beispiel 7

Entspricht Beispiel 1, allerdings werden 124,00 Gew.-Teile ATH, 31,00 Gew.-Teile Effektteilchen in schwarz und grün, 91,00 Gew.-Teile Microglaskugeln und 38,70 Gew.-Teile farbiger Quarzsand einer Körnung 0,3 bis 0,8 mm als Pigmentierungsmasse verwandt.

Nach Beispiel 8 erhält man eine leicht zu verarbeitende selbstverlaufende Beschichtungsmasse, welche mit denen von Beispiel 1 bis 3 vergleichbar ist.

## Patentansprüche

1. Harz/Füllstoffsystem zur Erzeugung von Beschichtungen mit Natursteineffekt, insbesondere von Kunststoffböden, auf Basis von Epoxid- oder Polyurethanharzen mit Zuschlagstoffen, dadurch gekennzeichnet, daß das System 3 bis 90 Gew.-% Harzmasse und 10 bis 97 Gew.-% einer Pigmentierungsmasse umfaßt, wobei die Pigmentierungsmasse selbst 20 bis 99,5 Gew.-%, bezogen auf die Pigmentierungsmasse, fein vermahlene mineralische Füllstoffe, 0,1 bis 35 Gew.-% Fließmittel aus sphärischen Teilchen, 0,25 bis 50 Gew.-% undurchsichtige Effektteilchen einer Teilchengröße > 100 µm, und 0,25 bis 50 Gew.-% durchsichtige und/oder durchscheinde Effektteilchen einer Teilchengröße > 100 µm enthält.

2. Harz/Füllstoffsystem nach Anspruch 1, dadurch gekennzeichnet, daß das Fließmittel aus sphärischen, massiven oder hohlen Teilchen einer Teilchengröße < 1000 µm besteht.

3. Harz/Füllstoffsystem nach Anspruch 2, dadurch gekennzeichnet, daß die sphärischen Teilchen Hohlkugeln einer Teilchengröße < 250 µm sind.

4. Harz/Füllstoffsystem nach Anspruch 1, dadurch gekennzeichnet, daß das Fließmittel aus farbigem oder ungefärbtem Quarzsand einer Teilchengröße < 1000 µm besteht.

5. Harz/Füllstoffsystem nach einem der vorstehenden Ansprüche zur Erzeugung von selbstverlaufenden Beschichtungen, dadurch gekennzeichnet, daß es 10 bis 85 Gew.-% Pigmentierungsmasse enthält.

6. Spachtelfähiges Harz/Füllstoffsystem nach einem der Ansprüche 1 bis 4, dadurch gekennzeichnet, daß es 70 bis 95 Gew.-% Pigmentierungsmasse enthält.

7. Mörtelartiges Harz/Füllstoffsystem nach einem der Ansprüche 1 bis 4, dadurch gekennzeichnet, daß es 80 bis 97 Gew.-% Pigmentierungsmasse enthält.

8. Harz/Füllstoffsystem nach einem der vorstehenden Ansprüche, dadurch gekennzeichnet, daß es als feinvermahlene mineralische Füllstoffe Metalloxide, -sulfate, -carbonate, -silikate, Siliciumdioxid oder Mischungen derselben in einer Körnung ≤ 100 µm enthält.

9. Harz/Füllstoffsystem nach einem der vorstehenden Ansprüche, dadurch gekennzeichnet, daß die Pigmentierungsmasse Aluminiumoxidtrihydrat enthält.

10. Harz/Füllstoffsystem nach einem der vorstehenden Ansprüche, dadurch gekennzeichnet, daß die Pigmentierungsmasse Effektteilchen einer Teilchengröße ≥ 200 µm enthält.

11. Harz/Füllstoffsystem nach einem der vorstehenden Ansprüche, dadurch gekennzeichnet, daß die Harzmasse 0,5 bis 5 Gew.-% eines Paraffin- und/oder Wachszusatzes zur Erhöhung der Gleitwirkung bzw. Kratzfestigkeit enthält.

12. Harz/Füllstoffsystem nach einem der vorstehenden Ansprüche in Form eines Mehrkomponentensystems, bestehend aus einer Harzkomponente A, einer Härterkomponente B und/oder einer Pigmentierungskomponente C.

13. Beschichtung aus dem Harz/Füllstoffsystem nach einem der vorstehenden Ansprüche mit einer Schichtdicke von 1 bis 30 mm.

14. Beschichtung nach Anspruch 13 in Form eines gefüllten Kunststoffbodens.

15. Kunststoffboden nach Anspruch 14, dadurch gekennzeichnet, daß er eine Grundschicht aus einem Epoxidharz, eine Zwischenschicht aus einer Pigmentierungsmasse mit 50 bis 99,5 Gew.-% Aluminiumoxidtrihydrat und 0,5 bis 50 Gew.-% farbigen Kunststoffpartikeln als Effektteilchen, sowie eine Versiegelungsschicht aus einem Polyurethan- oder Epoxidharz, umfaßt.

16. Kunststoffboden nach Anspruch 14 oder 15, gekennzeichnet durch eine Gesamtstärke von 1 bis 5 mm.

17. Verfahren zur Herstellung einer pigmentierten Kunststoffbeschichtung nach einem der Ansprüche 13 bis 16, welches die folgenden, nacheinander aufgeführten Schritte aufweist:
a) Vorbereiten des Substrates;
b) Aufbringen einer üblichen Grundierung;
c) Aufbringen des Harz/Füllstoffsystems; und
d) Aushärtenlassen der dadurch erzeugten Kunstharzmasse.

18. Verfahren nach Anspruch 17, dadurch gekennzeichnet, daß die Kunstharzmasse in einer Schichtdicke von 1 bis 30 mm auf den Untergrund aufgetragen wird.

19. Verfahren nach einem der Ansprüche 17 und 18, dadurch gekennzeichnet, daß die Oberfläche des Kunststoffbodens bis zur Erzielung des jeweils gewünschten Struktureffektes geschliffen wird.

20. Verfahren nach einem der Ansprüche 17 bis 19, dadurch gekennzeichnet, daß die Oberfläche poliert und/oder versiegelt wird.

## Claims

1. Resin/filler system for producing coatings with a natural stone effect, particularly plastic floors, based on epoxide or polyurethane resins with additives, characterised in that the system includes 3 to 90% by wt. resin composition and 10 to 97% by wt. of a pigmentation composition, the pigmentation composition itself containing 20 to 99.5% by wt., with respect to the pigmentation composition, finely ground mineral fillers, 0.1 to 35% by wt. flowing agent comprising spherical particles, 0.25 to 50% by wt. opaque effect particles with particle size > 100µm and 0.25 to 50% by wt. transparent and/or translucent effect particles with a particle size > 100µm.

2. Resin/filler system as claimed in claim 1, characterised in that the flowing agent comprises spherical, massive or hollow particles with a particle size < 1000µm.

3. Resin/filler system as claimed in claim 2, characterised in that the spherical particles are hollow spheres with a particle size < 250µm.

4. Resin/filler system as claimed in claim 1, characterised in that the flowing agent comprises coloured or uncoloured quartz sand with a particle size < 1000µm.

5. Resin/filler system as claimed in one of the preceding claims for producing self-flowing coatings, characterised in that it contains 10 to 85% by wt. pigmentation composition.

6. Trowelable resin/filling system as claimed in one of claims 1 to 4, characterised in that it contains 70 to 95% by wt. pigmentation composition.

7. Mortar-like resin/filler system as claimed in one of claims 1 to 4, characterised in that it contains 80 to 97% by wt. pigmentation composition.

8. Resin/filler system as claimed in one of the preceding claims, characterised in that it contains metal oxides, sulphates, carbonates, silicates, silicon dioxide or mixtures thereof in a grain size ≤ 100 µm as the finely ground mineral fillers.

9. Resin/filler system as claimed in one of the preceding claims, characterised in that the pigmentation composition contains aluminium oxide trihydrate.

10. Resin/filler system as claimed in one of the preceding claims, characterised in that the pigmentation composition contains effect particles with a particle size ≥ 200 µm.

11. Resin/filler system as claimed in one of the preceding claims, characterised in that the resin composition contains 0.5 to 5% by wt. of a paraffin and/or wax additive to increase the slip effect or scratch resistance.

12. Resin/filler system as claimed in one of the preceding claims in the form of a multi-component system comprising a resin component A, a setting agent component B and/or a pigmentation component C.

13. Coating of the resin/filler system as claimed in one of the preceding claims with a layer thickness of 1 to 30mm.

14. Coating as claimed in claim 13 in the form of a filled plastic floor.

15. Plastic floor as claimed in claim 14, characterised in that it includes a base layer of an epoxide resin, an intermediate layer of a pigmentation composition with 50 to 99.5% by wt. aluminium oxide trihydrate and 0.5 to 50% by wt. coloured plastic particles constituting effect particles and a sealing layer of a polyurethane or epoxide resin.

16. Plastic floor as claimed in claim 14 or 15, characterised by an overall thickness of 1 to 5mm.

17. Method of producing a pigmented plastic coating as claimed in one of claims 13 to 16 which has the following successively performed steps:
a) preparation of the substrate;
b) application of a conventional primer;
c) application of the resin/filler system; and
d) permitting the resin mass thereby produced to set.

18. Method as claimed in claim 17, characterised in that the resin composition is applied into the substrate in a layer of 1 to 30mm thickness.

19. Method as claimed in one of claims 17 and 18, characterised in that the surface of the plastic floor is ground until the desired the structural effect is achieved.

20. Method as claimed in one of claims 17 to 19, characterised in that the surface is polished and/or sealed.

## Revendications

1. Système résine/charge pour la production de revêtements comportant un effet de pierre naturellle, en particulier pour la production de sols en matière plastique, sur la base de résines époxyde et polyuréthane comportant des matériaux d'addition,
caractérisé en ce que le système contient 3 à 90 % en poids de masse de résine et 10 à 97 % en poids d'une masse de pigmentation, la masse de pigmentation contenant, elle-même 20 à 99,5 % en poids, rapporté à la masse de pigmentation, de matériau de remplissage minéral finement moulu, 0,1 à 35 % en poids de solvant constitué de particules sphériques, 0,25 à 50 % en poids de particules opaques à effet, d'une grandeur >100 µm, et 0,25 à 50 % en poids de particules transparentes et/ou translucides à effet, d'une grandeur > 100 µm.

2. Système résine/charge suivant la revendication 1, caractérisé en ce que le solvant est constitué de particules sphériques, massives ou creuses, d'une grandeur < 1000 µm.

3. Système résine/charge suivant la revendication 2, caractérisé en ce que les particules sphériques sont des billes creuses, d'une grandeur < 250 µm.

4. Système résine/charge suivant la revendication 1, caractérisé en ce que le solvant est constitué de sable de quartz, coloré ou non-coloré, d'une grandeur de particules <1000 µm.

5. Système résine/charge suivant l'une des revendications précédentes pour la production de revêtements autonivelants, caractérisé en ce qu'il contient 10 à 85 % en poids de masse de pigmentation.

6. Système résine/charge, applicable à la spatule, suivant l'une des revendications 1 à 4, caractérisé en ce qu'il contient 70 à 95 % en poids de masse de pigmentation.

7. Système résine/charge, du genre mortier, suivant l'une des revendications 1 à 4, caractérisé en ce qu'il contient 80 à 97 % en poids de masse de pigmentation.

8. Système résine/charge suivant l'une des revendications précédentes, caractérisé en ce qu'il contient, comme matériau minéral de remplissage finement moulu, des oxydes métalliques, des sulfates, des carbonates, des silicates, du dioxyde de silicium ou des mélanges de ceux-ci, présentant une granulométrie ≤ 100 µm.

9. Système résine/charge suivant l'une des revendications précédentes, caractérisé en ce que la masse de pigmentation contient du trihydrate d'oxyde d'aluminium.

10. Système résine/charge suivant l'une des revendications précédentes, caractérisé en ce que la masse de pigmentation contient des particules à effet, d'une grandeur >200 µm.

11. Système résine/charge suivant l'une des revendications précédentes, caractérisé en ce que la masse de résine contient 0,5 à 5 % en poids d'une addition de paraffine ou de cire pour augmenter l'effet de glissement ou la résistance à l'abrasion.

12. Système résine/charge suivant l'une des revendications précédentes, sous la forme d'un système à plusieurs composants, constitué d'un composant de résine A, d'un composant de durcissement B et/ou d'un composant de pigmentation C.

13. Revêtement réalisé à partir du système résine/charge suivant l'une des revendications précédentes, comportant une épaisseur de couche de 1 à 30 mm.

14. Revêtement suivant la revendication 13, sous la forme d'un sol en matière plastique chargé.

15. Sol en matière plastique suivant la revendication 14, caractérisé en ce qu'il comporte une couche de base formée de résine époxyde, une couche intermédiaire formée de masse de pigmentation comportant 50 à 99,5 % en poids de trihydrate d'oxyde d'aluminium et 0,5 à 50 % en poids de particules de matière plastique colorées comme particules à effet, ainsi qu'une couche de vitrification composée d'une résine polyuréthane ou époxyde.

16. Sol en matière plastique suivant la revendication 14 ou la revendication 15, caractérisé par une épaisseur totale de 1 à 5 mm.

17. Procédé de production d'un revêtement pigmenté en matière plastique suivant l'une des revendications 13 à 16, présentant les étapes suivantes, réalisées successivement:
a) Préparation du substrat;
b) Application d'une couche de fond usuelle;
c) Application du système résine/charge; et
d) Laisser durcir la masse de résine plastique ainsi réalisée.

18. Procédé suivant la revendication 17, caractérisé en ce que la masse de résine plastique est appliquée sur le substratum dans une épaisseur de couche allant de 1 à 30 mm.

19. Procédé suivant la revendication 17 et la revendication 18, caractérisé en ce que la surface du sol plastique est poncée jusqu'à obtenir l'effet de structure désiré dans chaque cas.

20. Procédé suivant l'une des revendications 17 à 19, caractérisé en ce que la surface supérieure est polie et/ou vitrifiée.
